# FASCICULE DE BREVET EUROPEEN

(11) **EP 1 829 710 B1**
(45) Date de publication et mention de la délivrance du brevet: **12.10.2011**
(21) Numéro de dépôt: 07290262.0
(22) Date de dépôt: 02.03.2007
(51) Int. Cl.: B60B 11/02

(54) **Tendeur de serrage pour le jumelage de roues de véhicule**
Spannring zur Zwillingsanordnung von Fahrzeugrädern
Tightening belt idler for twinning the wheels of a vehicle

(30) Priorité: 03.03.2006 FR 0601922
(43) Date de publication de la demande: 05.09.2007
(73) Titulaire: Etudes et Realisations de Machines Agricoles Speciales - E.R.M.A.S., 89100 Sens (FR)
(72) Inventeur: Cornet, René, 89340 Saint-Agnan (FR)
(74) Mandataire: Puiroux, Guy

(56) Documents cités:
- EP-A1- 0 572 876
- EP-A2- 0 084 979
- EP-B1- 0 854 791
- GB-A- 191 000 176
- US-A- 3 337 270
- US-A- 4 005 907

## Description

La présente invention concerne un tendeur de serrage pour le jumelage d'une roue auxiliaire à une roue principale d'un véhicule, tel qu'un tracteur agricole, destiné à s'accrocher d'une part sur la roue principale et d'autre part sur un rebord circulaire interne prévu sur la face interne de la jante de la roue auxiliaire et constituant une rainure annulaire avec ladite face interne de la jante.

On connaît de tels tendeurs de serrage utilisés pour assembler une roue principale d'un véhicule à une roue auxiliaire, afin d'obtenir un ensemble de roues jumelées. Le jumelage des roues est mis en oeuvre pour certains véhicules lourds, tels que les tracteurs agricoles, et permet une meilleure traction, une plus faible pression au sol ainsi qu'une capacité de charge plus importante.

Ces tendeurs, tels que ceux décrits dans les brevets US 3,337,270 et US 4,005,907, comprennent d'une manière générale une tige dont une extrémité s'accroche sur la roue principale, l'autre extrémité étant insérée dans une pièce en forme de crochet terminé en U et inséré dans la rainure annulaire pour s'accrocher sur le rebord circulaire interne de la jante, le crochet épousant alors la forme du rebord circulaire interne de manière à transmettre au maximum la tension de serrage à la jante et à garantir le maintien en position du crochet.

EP 0084979 décrit le préambule de la revendication 1.

Toutefois, afin de garantir l'assemblage des deux roues jumelées, il est nécessaire de multiplier le nombre de tendeurs répartis sur les roues. Ceci signifie notamment une augmentation du temps de montage et démontage pour monter et démonter tous les tendeurs ainsi que des coûts importants de l'équipement complet pour le jumelage.

Le but de la présente invention est donc de pallier ces différents inconvénients, en proposant un tendeur de serrage et un kit comprenant un ensemble de tels tendeurs de serrage qui permettent de réduire le nombre de tendeurs de serrage utilisés tout en garantissant un assemblage des roues jumelées efficace.

A cet effet, et conformément à la présente invention, il est proposé un tendeur de serrage pour le jumelage d'une roue auxiliaire à une roue principale d'un véhicule, tel qu'un tracteur agricole, destiné à s'accrocher d'une part sur la roue principale et d'autre part sur un rebord circulaire interne prévu sur la face interne de la jante de la roue auxiliaire et constituant une rainure annulaire avec ladite face interne de la jante, remarquable en ce qu'il comprend une tige munie de moyens d'accrochage sur la roue principale et une plaque présentant deux crochets latéraux distincts destinés à être insérés dans la rainure annulaire pour s'accrocher sur le rebord circulaire interne de la jante, les deux crochets latéraux étant écartés de sorte que le segment imaginaire entre les crochets latéraux forme une corde pour l'arc de cercle défini par le rebord circulaire interne entre les deux crochets latéraux, de manière à répartir l'effort de serrage sur la jante de la roue auxiliaire.

De préférence, les deux crochets latéraux sont symétriques par rapport à l'axe de la tige de manière à constituer deux appuis uniformément répartis sur le rebord circulaire interne par rapport à l'axe de la tige.

D'une manière avantageuse, les crochets latéraux sont prévus sur un bord supérieur de ladite plaque qui est prolongée sur le bord inférieur opposé par ladite tige, perpendiculairement aux deux crochets latéraux.

Les moyens d'accrochage de la tige sur la roue principale peuvent être constitués d'un crochet destiné à s'accrocher sur un anneau de fixation correspondant prévu sur la roue principale.

D'une manière avantageuse, la plaque présente entre son bord supérieur et son bord inférieur un logement tubulaire dans lequel est insérée la tige qui le traverse de part en part, permettant à la plaque de coulisser le long de la tige, la tige comprenant un dispositif de blocage de la position de la plaque une fois accrochée sur la roue auxiliaire. De préférence, l'extrémité de la tige débouchant du logement tubulaire de la plaque est filetée et le dispositif de blocage de la position de la plaque comprend un écrou vissé sur l'extrémité filetée de la tige et venant en butée contre la plaque.

Il est possible de prévoir dans le logement tubulaire un ressort de rappel permettant l'auto-positionnement et le maintien des crochets latéraux dans la rainure annulaire avant le serrage du tendeur.

La présente invention concerne également un kit pour le jumelage d'une roue auxiliaire à une roue principale d'un véhicule, tel qu'un tracteur agricole, comprenant une entretoise destinée à être placée entre la roue principale et la roue auxiliaire, au moins un anneau de fixation destiné à être fixé sur la roue principale, remarquable en ce qu'il comprend un ensemble de tendeurs de serrage conformément aux tendeurs décrits ci-dessus à répartir uniformément autour des roues.

D'autres avantages et caractéristiques ressortiront mieux de la description qui va suivre d'un tendeur de serrage conforme à l'invention, donné à titre d'exemple non limitatif, en référence aux dessins annexés sur lesquels :
- la figure 1 est une vue en perspective de deux roues jumelées équipées d'un tendeur de serrage selon l'invention, et
- la figure 2 est une vue isométrique du tendeur de serrage selon l'invention, accroché sur la roue auxiliaire, et
- la figure 3 est une vue de dessus de la figure 2.

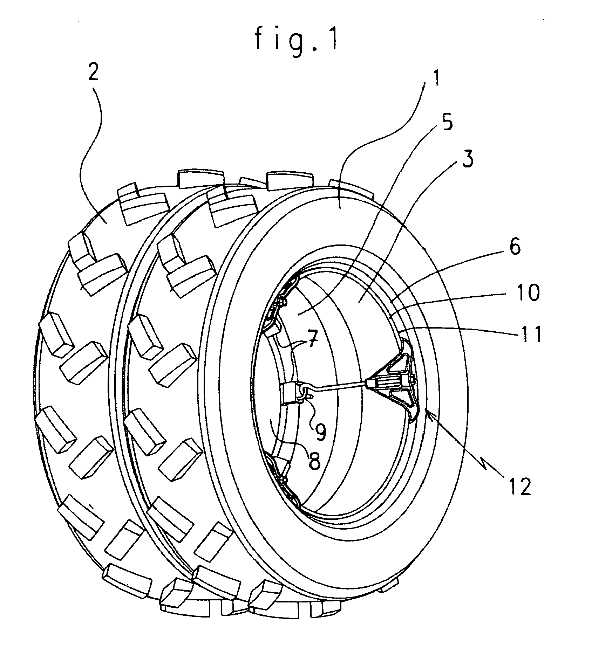

En référence à la figure 1, il est représenté une roue auxiliaire 1 jumelée à une roue principale 2 d'un véhicule tel qu'un tracteur agricole. D'une manière connue, l'écartement et le centrage de la roue auxiliaire 1 par rapport à la roue principale 2 sont réalisés au moyen d'une entretoise cylindrique 3. La roue principale 2 comprend une jante 5 et la roue auxiliaire 1 comprend une jante 6. Sur la roue principale 2, à l'intérieur de la jante 5 sont fixés des pontets 7. Un disque 8 est fixé aux pontets 7 par des boulons, dont certains sont vissés dans des écrous solidaires d'anneaux de fixation 9. La jante 6 de la roue auxiliaire 1 comporte sur sa face interne un rebord circulaire interne 10, constitué par exemple d'un fer rond soudé sur la face interne de la jante 6. Le rebord circulaire interne 10 constitue avec ladite face interne de la jante 6 une rainure annulaire 11.

Le serrage de l'entretoise 3 entre les deux roues 1 et 2 s'effectue avec des tendeurs de serrage 12 s'accrochant d'une part sur les anneaux de fixation 9 de la roue principale 2 et d'autre part sur le rebord circulaire interne 10 de la jante 6 de la roue auxiliaire 1.

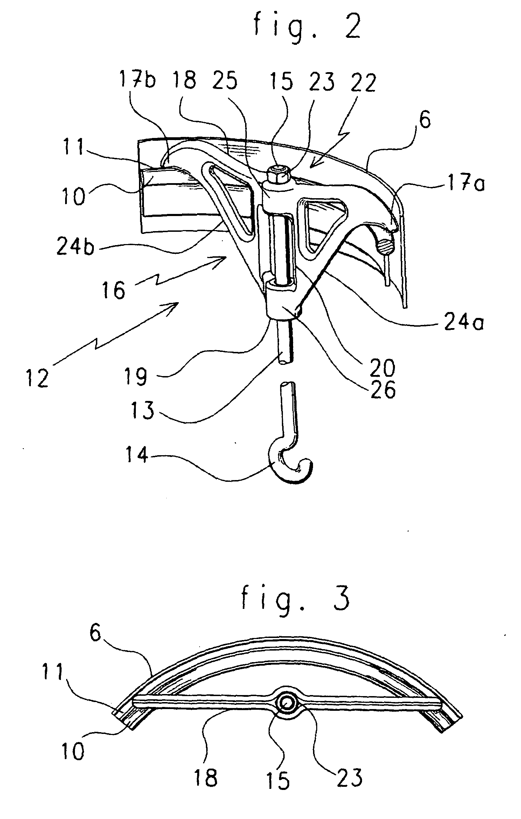

En référence aux figures 2 et 3, le tendeur de serrage 12 selon l'invention comprend une tige 13 munie à une extrémité d'un crochet 14 constituant les moyens d'accrochage sur l'anneau de fixation 9 correspondant prévu sur la roue principale 2. A l'opposé, l'extrémité 15 de la tige 13 est filetée.

Le tendeur de serrage 12 comprend également une plaque 16 présentant deux crochets latéraux 17a, 17b distincts destinés à être insérés dans la rainure annulaire 11 pour s'accrocher sur le rebord circulaire interne 10 de la jante 6 de la roue auxiliaire 1. Les deux crochets latéraux 17a, 17b sont suffisamment écartés de sorte que le segment imaginaire entre lesdits crochets latéraux 17a, 17b forme une corde pour l'arc de cercle défini par le rebord circulaire interne 10 entre les deux crochets latéraux 17a, 17b comme le montre la figure 3. Ainsi, un seul tendeur constitue deux points d'appui distants sur la jante 6, ce qui augmente la répartition des efforts de serrage sur la jante.

Les crochets latéraux 17a, 17b sont prévus sur le bord supérieur 18 de la plaque 16 qui est prolongée sur son bord inférieur 19 opposé par la tige 13, perpendiculairement aux crochets latéraux 17a, 17b.

La plaque 16 présente la forme générale d'un triangle, de préférence isocèle, dont deux des sommets sont terminés par les crochets latéraux 17a, 17b, le troisième sommet étant occupé par la tige 13 qui traverse la plaque 16 selon la hauteur relative au côté du triangle comprenant les deux crochets latéraux 17a, 17b.

Les crochets latéraux 17a, 17b sont symétriques par rapport à l'axe de la tige 13 de manière à constituer deux points d'appui uniformément répartis sur le rebord circulaire interne 10 par rapport à l'axe de la tige 13.

La plaque 16 présente entre son bord supérieur 18 et son bord inférieur 19 un logement tubulaire 20 dans lequel est insérée la tige 13 qui le traverse de part en part, permettant à la plaque 16 de coulisser le long de la tige 13. Il est prévu dans le logement tubulaire 20 un ressort de rappel (non représenté) permettant l'auto-positionnement et le maintien des crochets latéraux 17a, 17b dans la rainure annulaire 11 avant le serrage du tendeur 12.

La tige 13 comprend un dispositif de blocage 22 de la position de la plaque 16 constitué d'un écrou 23 vissé sur l'extrémité filetée 15 de la tige 13 et venant en butée contre le bord supérieur 18 de la plaque 16.

D'une manière avantageuse, la plaque 16 comprend deux demi-plaques 24a, 24b symétriques, chacune présentant la forme globale d'un triangle rectangle et étant terminée par le crochet latéral 17a, 17b respectivement. Les deux demi-plaques 24a, 24b reliées par deux manchons 25, 26 coaxiaux et alignés avec les bords supérieur 18 et inférieur 19 respectivement de la plaque 16. L'espace formé entre les manchons 25, 26 et les demi-plaques 24a, 24b constitue le logement tubulaire 20.

Pour réaliser la plaque 16, les deux demi-plaques 24a, 24b peuvent être soudées aux manchons 25, 26 pour former le logement tubulaire 20, ou l'ensemble peut être réalisé d'une seule pièce par moulage. La tige 13 est introduite dans le manchon 26, puis le ressort de rappel est introduit sur la tige 13 par le manchon 25 et est choisi pour que son extrémité inférieure vienne en butée contre le manchon 26. Le ressort de rappel est mis sous contrainte, l'extrémité supérieure du ressort de rappel venant en butée contre une entretoise fixée à la tige 13 au moyen d'une vis de pression. Pour finir, l'écrou 23 est vissé sur l'extrémité filetée 15 de la tige 13.

Lors du jumelage des roues, les tendeurs de serrage 12 sont répartis uniformément autour des roues. Le crochet 14 du tendeur de serrage 12 est accroché sur l'anneau de fixation 9 de la roue principale 2, et les crochets latéraux 17a, 17b de la plaque 16 sont introduits dans la rainure annulaire 11 de la roue auxiliaire 1. Le coulissement de la plaque 16 le long de la tige 13 ainsi que le ressort de rappel permettent de positionner correctement et facilement les crochets latéraux 17a, 17b par rapport à la jante 6 et de les maintenir dans la rainure annulaire 11 avant le serrage du tendeur 12. Le serrage est sécurisé en vissant l'écrou 23 du dispositif de blocage 22 au moyen par exemple d'une clé de serrage (non représentée), jusqu'à ce que l'écrou 23 vienne en butée contre le bord supérieur 18 de la plaque 16.

Le tendeur de serrage 12 selon l'invention permet, au moyen d'un seul tendeur, d'obtenir deux points d'appui distincts sur le rebord circulaire interne 10 de la jante 6 et d'augmenter ainsi la répartition des efforts sur la jante par rapport aux tendeurs traditionnels. De ce fait, le nombre de tendeurs de serrage 12 à répartir autour des roues pour assurer le serrage des roues jumelées peut être réduit. On peut par exemple prévoir l'utilisation de deux ou trois tendeurs de serrage par côté, au lieu de quatre ou six tendeurs habituellement nécessaires.

Les temps de montage et de démontage de la roue de jumelage sont diminués puisqu'il y a moins de tendeurs à mettre en place.

Le tendeur de serrage 12 selon l'invention peut être commercialisé avec un kit pour le jumelage de roues, ledit kit comprenant l'entretoise 3, les anneaux de fixation 9 et les tendeurs de serrage 12 selon l'invention. Le nombre de tendeurs de serrage 12 et d'anneaux de fixation 9 étant réduit, le prix de l'équipement complet est moindre.

Il est possible de prévoir que, dans le kit, l'entretoise 3 a été associée au préalable à une jante pour recevoir la roue auxiliaire 1, la face interne de ladite jante comprenant le rebord circulaire interne 10 constituant la rainure annulaire 11 avec ladite face interne de la jante 6.

La présente invention s'applique plus particulièrement aux tendeurs de serrage pour les roues de tracteur agricole, mais il est bien évident que l'exemple que l'on vient de donner n'est qu'une illustration particulière en aucun cas limitative quant aux domaines d'application de l'invention. En effet, un tel tendeur de serrage peut être utilisé pour jumeler des roues de tout type d'engin, en particulier des engins lourds.

## Revendications

1. Tendeur de serrage (12) pour le jumelage d'une roue auxiliaire (1) à une roue principale (2) d'un véhicule, tel qu'un tracteur agricole, destiné à s'accrocher d'une part sur la roue principale (2) et d'autre part sur un rebord circulaire interne (10) prévu sur la face interne de la jante (6) de la roue auxiliaire (1) et constituant une rainure annulaire (11) avec ladite face interne de la jante (6), et qui comprend une tige (13) munie de moyens d'accrochage (14) sur la roue principale (2) **caractérisé en ce qu'**il comprend une plaque (16) présentant deux crochets latéraux (17a, 17b) distincts destinés à être insérés dans la rainure annulaire (11) pour s'accrocher sur le rebord circulaire interne (10) de la jante (6), les deux crochets latéraux (17a, 17b) étant écartés de sorte que le segment imaginaire entre les crochets latéraux (17a, 17b) forme une corde pour l'arc de cercle défini par le rebord circulaire interne (10) entre les deux crochets latéraux (17a, 17b), de manière à répartir l'effort de serrage sur la jante (6) de la roue auxiliaire (1).

2. Tendeur (12) selon la revendication 1, **caractérisé en ce que** les deux crochets latéraux (17a, 17b) sont symétriques par rapport à l'axe de la tige (13) de manière à constituer deux appuis uniformément répartis sur le rebord circulaire interne (10) par rapport à l'axe de la tige (13).

3. Tendeur (12) selon l'une quelconque des revendications précédentes, **caractérisé en ce que** les crochets latéraux (17a, 17b) sont prévus sur un bord supérieur (18) de ladite plaque (16) et **en ce que** ladite plaque (16) est prolongée sur le bord inférieur opposé (19) par ladite tige (13), perpendiculairement aux deux crochets latéraux (17a, 17b).

4. Tendeur (12) selon l'une quelconque des revendications précédentes, **caractérisé en ce que** les moyens d'accrochage de la tige (13) sur la roue principale (2) sont constitués d'un crochet (14) destiné à s'accrocher sur un anneau de fixation (9) correspondant prévu sur la roue principale (2).

5. Tendeur (12) selon l'une quelconque des revendications précédentes, **caractérisé en ce que** la plaque (16) présente entre son bord supérieur (18) et son bord inférieur (19) un logement tubulaire (20) dans lequel est insérée la tige (13) qui le traverse de part en part, permettant à la plaque (16) de coulisser le long de la tige (13), ladite tige (13) comprenant un dispositif de blocage (22) de la position de la plaque (16).

6. Tendeur (12) selon la revendication 5, **caractérisé en ce que** l'extrémité (15) de la tige (13) débouchant du logement tubulaire (20) de la plaque (16) est filetée et **en ce que** le dispositif de blocage (22) de la position de la plaque (16) comprend un écrou (23) vissé sur l'extrémité (15) filetée de la tige (13) et venant en butée contre la plaque (16).

7. Tendeur (12) selon la revendication 5, **caractérisé en ce qu'**il est prévu dans le logement tubulaire (20) un ressort de rappel permettant l'auto-positionnement et le maintien des crochets latéraux (17a, 17b) dans la rainure annulaire (11) avant le serrage du tendeur (12).

8. Tendeur (12) selon l'une quelconque des revendications précédentes, **caractérisé en ce que** la plaque (16) présente une forme générale triangulaire, dont deux des sommets sont terminés par les crochets latéraux (17a, 17b), le troisième sommet étant occupé par la tige (13) qui traverse la plaque (16) selon la hauteur relative au côté du triangle comprenant les deux crochets latéraux (17a, 17b).

9. Kit pour le jumelage d'une roue auxiliaire (1) à une roue principale (2) d'un véhicule, tel qu'un tracteur agricole, comprenant une entretoise (3) destinée à être placée entre la roue principale (2) et la roue auxiliaire (1), au moins un anneau de fixation (9) destiné à être fixé sur la roue principale (2), **caractérisé en ce qu'**il comprend un ensemble de tendeurs de serrage (12) selon l'une quelconque des revendications 1 à 8 à répartir uniformément autour des roues.

10. Kit selon la revendication 9, **caractérisé en ce que** l'entretoise (3) est associée à une jante (6) pour la roue auxiliaire (1), la face interne de ladite jante (6) comprenant un rebord circulaire interne (10) constituant une rainure annulaire (11) avec ladite face interne de la jante (6).

## Claims

1. Tightening belt (12) for the twinning of an auxiliary wheel (1) to a main wheel (2) of a vehicle, such as a farm tractor, intended to be attached on the one hand to the main wheel (2) and on the other hand to an internal circular edge (10) provided on the internal face of the rim (6) of the auxiliary wheel (1) and constituting an annular groove (11) with said internal face of the rim (6), and which includes a rod (13) provided with means for attaching (14) on the main wheel (2), **characterised in that** it includes a plate (16) having two separate lateral hooks (17a, 17b) intended to be inserted into the annular groove (11) in order to attach to the internal circular edge (10) of the rim (6), the two lateral hooks (17a, 17b) being separated in such a way that the imaginary segment between the lateral hooks (17a, 17b) forms a cord for the arc of a circle defined by the internal circular edge (10) between the two lateral hooks (17a, 17b), in such a way as to distribute the tightening force on the rim (6) of the auxiliary wheel (1).

2. Belt (12) according to claim 1, **characterised in that** the two lateral hooks (17a, 17b) are symmetrical in relation to the axis of the rod (13) in such a way as to constitute two evenly distributed supports on the internal circular edge (10) in relation to the axis of the rod (13).

3. Belt (12) as claimed in any preceding claim, **characterised in that** the lateral hooks (17a, 17b) are provided on an upper edge (18) of said plate (16) and **in that** said plate (16) is extended on the opposite lower edge (19) by said rod (13), perpendicularly to the two lateral hooks (17a, 17b).

4. Belt (12) as claimed in any preceding claim, **characterised in that** the means for attaching the rod (13) on the main wheel (2) are constituted of a hook (14) intended to be attached to a corresponding fastening ring (9) provided on the main wheel (2).

5. Belt (12) as claimed in any preceding claim, **characterised in that** the plate (16) has between its upper edge (18) and its lower edge (19) a tubular housing (20) wherein is inserted the rod (13) which passes right through it, allowing the plate (16) to slide along the rod (13), said rod (13) comprising a device for locking (22) the position of the plate (16).

6. Belt (12) according to claim 5, **characterised in that** the end (15) of the rod (13) exiting from the tubular housing (20) of the plate (16) is threaded and **in that** the device for locking (22) the position of the plate (16) comprises a nut (23) screwed on the threaded end (15) of the rod (13) and coming to stop against the plate (16).

7. Belt (12) according to claim 5, **characterised in that** (20) a return spring is provided in the tubular housing allowing for the self-positioning and the maintaining of the lateral hooks (17a, 17b) in the annular groove (11) before the tightening of the belt (12).

8. Belt (12) as claimed in any preceding claim, **characterised in that** the plate (16) has a generally triangular shape, of which two of the tops are terminated by the lateral hooks (17a, 17b), the third top being occupied by the rod (13) which passes through the plate (16) according to the relative height to the side of the triangle comprising the two lateral hooks (17a, 17b).

9. Kit for the twinning of an auxiliary wheel (1) to a main wheel (2) of a vehicle, such as a farm tractor, comprising a spacer (3) intended to be placed between the main wheel (2) and the auxiliary wheel (1), at least one fastening ring (9) intended to be fixed on the main wheel (2), **characterised in that** it comprises a set of tightening belts (12) according to any of claims 1 to 8 to be distributed evenly around the wheels.

10. Kit according to claim 9, **characterised in that** the spacer (3) is associated with a rim (6) for the auxiliary wheel (1), the internal face of said rim (6) comprising an internal circular edge (10) constituting an annular groove (11) with said internal face of the rim (6).

## Patentansprüche

1. Spannring (12) zur Zwillingsanordnung eines Hilfsrads (1) an ein Hauptrad (2) eines Fahrzeuges, wie ein Ackerschlepper, der dazu vorgesehen ist, einerseits an das Hauptrad (2) und andererseits an einen kreisförmigen Innenrand (10), der an der Innenseite der Felge (6) des Hilfsrads (1) vorgesehen ist und eine Ringnut (11) mit der Innenseite der Felge (6) bildet, angehängt zu werden, und der einen Bolzen (13), der mit Anhängemittel (14) am Hauptrad (2) versehen ist, umfasst, **dadurch gekennzeichnet, dass** er eine Platte (16) umfasst, die zwei getrennte Seitenhaken (17a, 17b) aufweist, die dazu vorgesehen sind, in die Ringnut (11) eingeführt zu werden, um an den kreisförmigen Innenrand (10) der Felge (6) angehängt zu werden, wobei die zwei Seitenhaken (17a, 17b) derart voneinander entfernt sind, dass der imaginäre Abschnitt zwischen den Seitenhaken (17a, 17b) derart eine Sehne für den Kreisbogen, der vom kreisförmigen Innenrand (10) zwischen den zwei Seitenhaken (17a, 17b) definiert wird, bildet, dass die Spannkraft über die Felge (6) des Hilfsrads (1) verteilt wird.

2. Spannring (12) nach Anspruch 1, **dadurch gekennzeichnet, dass** die zwei Seitenhaken (17a, 17b) derart symmetrisch im Verhältnis zur Achse des Bolzens (13) sind, dass sie zwei Stützen bilden, die gleichförmig über den kreisförmigen Innenrand (10) im Verhältnis zur Achse des Bolzens (13) verteilt sind.

3. Spannring (12) nach einem der vorhergehenden Ansprüche, **dadurch gekennzeichnet, dass** die Seitenhaken (17a, 17b) an einem oberen Rand (18) der Platte (16) vorgesehen sind und dass die Platte (16) am gegenüber liegenden unteren Rand (19) durch den Bolzen (13) verlängert wird, im rechten Winkel zu den zwei Seitenhaken (17a, 17b).

4. Spannring (12) nach einem der vorhergehenden Ansprüche, **dadurch gekennzeichnet, dass** die Aufhängemittel des Bolzens (13) auf dem Hauptrad (2) aus einem Haken (14) gebildet werden, der dazu vorgesehen ist, an einen entsprechenden Befestigungsring (9), der am Hauptrad (2) vorgesehen ist, angehängt zu werden.

5. Spannring (12) nach einem der vorhergehenden Ansprüche, **dadurch gekennzeichnet, dass** die Platte (16) zwischen ihrem oberen Rand (18) und ihrem unteren Rand (19) eine Röhrenlagerung (20) aufweist, in die der Bolzen (13) eingeführt wird, wobei er sie vollkommen durchquert, was es der Platte (16) erlaubt, am Bolzen (13) entlang zu gleiten, wobei der Bolzen (13) eine Vorrichtung zum Blockieren (22) der Position der Platte (16) aufweist.

6. Spannring (12) nach Anspruch 5, **dadurch gekennzeichnet, dass** das Ende (15) des Bolzens (13), das aus der Röhrenlagerung (20) der Platte (16) mündet, ein Gewinde hat, und dadurch dass die Vorrichtung zum Blockieren (22) der Position der Platte (16) eine Mutter (23) umfasst, die auf das Gewindeende (15) des Bolzens (13) geschraubt ist und die gegen die Platte (16) anschlägt.

7. Spannring (12) nach Anspruch 5, **dadurch gekennzeichnet, dass** in der Röhrenlagerung (20) eine Rückholfeder vorgesehen ist, die die Selbstpositionierung und den Halt der Seitenhaken (17a, 17b) in der Ringnut (11) vor dem Festspannen des Spannrings (12) erlaubt.

8. Spannring (12) nach einem der vorhergehenden Ansprüche, **dadurch gekennzeichnet, dass** die Platte (16) eine allgemein dreieckige Form aufweist, von der zwei der Eckpunkte mit den Seitenhaken (17a, 17b) enden, wobei der dritte Eckpunkt vom Bolzen (13) eingenommen wird, der die Platte (16) durchquert, und dies nach der Höhe im Verhältnis zur Seite des Dreiecks mit den zwei Seitenhaken (17a, 17b).

9. Set zur Zwillingsanordnung eines Hilfsrads (1) an ein Hauptrad (2) von einem Fahrzeug, wie ein Ackerschlepper, das ein Zwischenstück (3) umfasst, das dazu vorgesehen ist, zwischen dem Hauptrad (2) und dem Hilfsrad (1) angeordnet zu werden, wobei zumindest ein Befestigungsring (9) dazu vorgesehen ist, an das Hauptrad (2) befestigt zu werden, **dadurch gekennzeichnet, dass** es eine Spannringeinheit (12) nach einem der Ansprüche 1 bis 8 umfasst, das gleichförmig um die Räder zu verteilen ist.

10. Set nach Anspruch 9, **dadurch gekennzeichnet, dass** das Zwischenstück (3) mit einer Felge (6) für das Hilfsrad (1) verbunden ist, wobei die Innenseite der Felge (6) einen kreisförmigen Innenrand (10) umfasst, der eine Ringnut (11) mit der Innenseite der Felge (6) bildet.
